# EUROPEAN PATENT SPECIFICATION

(11) **EP 2 921 219 B1**
(45) Date of publication and mention of the grant of the patent: **18.07.2018**
(21) Application number: 13855902.6
(22) Date of filing: 13.09.2013
(51) Int. Cl.: B01F 3/04, B01F 5/04, B01F 5/06, B01F 5/02, B01D 53/94, F01N 3/08, F01N 3/24

(54) **EXHAUST GAS PURIFICATION DEVICE**
ABGASREINIGUNGSVORRICHTUNG
DISPOSITIF DE PURIFICATION DES GAZ D'ÉCHAPPEMENT

(30) Priority: 16.11.2012 JP 2012252472
(43) Date of publication of application: 23.09.2015
(73) Proprietor: Futaba Industrial Co. Ltd., Okazaki-shi, Aichi 444-8558 (JP)
(72) Inventor: NAGATA, Yoshinobu, Okazaki-shi Aichi 444-8558 (JP); UMENO, Yasufumi, Okazaki-shi Aichi 444-8558 (JP)
(74) Representative: Otten, Roth, Dobler & Partner mbB Patentanwälte
(86) International application number: PCT/JP2013/074798
(87) International publication number: WO 2014/077023

(56) References cited:
- WO-A1-2008/111254
- WO-A1-2008/111254
- JP-A- 2003 505 638
- JP-A- 2009 068 460
- JP-A- 2009 085 179
- JP-A- 2010 090 808
- JP-A- 2011 252 498
- JP-A- 2013 002 334
- US-A1- 2009 019 843
- US-A1- 2010 132 345

## Description

### TECHNICAL FIELD

The present invention relates to an exhaust gas purification device that purifies exhaust gas in an exhaust gas flow path.

### BACKGROUND ART

Exhaust gas discharged from an internal combustion engine, such as a diesel engine, contains nitrogen oxides (NOx) as air pollutants. As a device for purifying such exhaust gas, an exhaust gas purification device is known that is configured such that a catalyst of SCR: (Selective Catalytic Reduction) type is provided in an exhaust gas flow path, and urea water is injected to the upstream exhaust gas. Urea water injected to the exhaust gas is hydrolyzed by heat of the exhaust gas. Ammonia (NH3) generated by the hydrolysis is supplied to the catalyst with the exhaust gas. Nitrogen oxides in the exhaust gas react with ammonia in the catalyst, and are thereby reduced and purified.

In this type of exhaust gas purification device, a catalyst with a large cross-sectional area is generally used in order to improve exhaust gas purifying effect by the catalyst. Upstream of the catalyst, an enlarged diameter flow path is formed to expand a diameter of the exhaust gas flow path. However, in a configuration with such an enlarged diameter flow path, an exhaust gas flow tends to be biased in the enlarged diameter flow path. Distribution of the exhaust gas flowing into the catalyst is likely to be biased.

Therefore, a configuration has been proposed in which a diffusion member for diffusing the exhaust gas into the enlarged diameter flow path is provided upstream of the enlarged diameter flow path (Patent Document 1).

### PRIOR ART DOCUMENTS

### PATENT DOCUMENTS

Patent Document 1: Japanese Unexamined Patent Application Publication No. 2010-90808

US 2010/0132345 A1 discloses a mixing device for selective catalytic reduction systems in accordance with the preamble of claim 1. US 2009/0019843 A1 discloses delivering a liquid reductant into an exhaust flow of a fuel burning engine.

WO 2008/111254 A1 discloses an exhaust gas purification apparatus for an internal combustion engine, which can realize the flow of an exhaust gas with a reducing agent uniformly dispersed therein into an NOx catalyst disposed on the downstream side of the exhaust gas purification apparatus.

### SUMMARY OF THE INVENTION

### PROBLEMS TO BE SOLVED BY THE INVENTION

Inventors of the present invention have found a problem in which, if distribution of a reducing agent (urea water or ammonia after the hydrolysis) is biased in the exhaust gas flowing to the diffusion member, the biased distribution of the reducing agent in the exhaust gas flowing into the catalyst also is not eliminated. That is, the diffusion member has a function of suppressing a biased exhaust gas flow in the enlarged diameter flow path, but does not have a function of dispersing the reducing agent unevenly present in the exhaust gas. In particular, when a direction in which the reducing agent is supplied and a direction of flow of the exhaust gas are different at a merging position where the reducing agent merges with the exhaust gas, flow of the reducing agent is influenced by the flow of the exhaust gas and is likely to be biased. Such biased distribution of the reducing agent flowing into the catalyst is a factor for decreasing the exhaust gas purifying effect by the catalyst.

In one aspect of the present invention, it is desirable to suppress biased distribution of the reducing agent flowing into the catalyst.

### MEANS FOR SOLVING THE PROBLEMS

The problems is solved by the features of the independent claim 1. Further advantageous embodiments are specified in dependent claims 2-5.

An exhaust gas purification device in one aspect of the present invention comprises: a catalyst provided downstream of an enlarged diameter flow path in an exhaust gas flow path; a diffusion member provided upstream of the enlarged diameter flow path in the exhaust gas flow path, the diffusion member causing exhaust gas that has flowed in from upstream to flow out to the enlarged diameter flow path to be diffused; a supply device that supplies a reducing agent to upstream of the diffusion member in the exhaust gas flow path; and a guide member provided upstream of the diffusion member, and at a merging position, or downstream of the merging position, where the reducing agent in the exhaust gas flow path merges with the exhaust gas, the guide member splitting a flow of the reducing agent that has flowed in from upstream into a plurality of flows to guide the flows to the diffusion member.

According to the above configuration, since the guide member is provided upstream of the diffusion member, biased distribution of the reducing agent flowing to the diffusion member can be suppressed, as compared with a case without the guide member. Therefore, it is possible to suppress biased distribution of the reducing agent flowing into the catalyst.

In the above configuration, the guide member comprises a plate with an air guide extending toward the merging position. The air guide splits the flow of the reducing agent to a first surface side of the plate, and to a second surface side that is a back surface of the first surface. According to this configuration, the flow of the reducing agent can be split into a plurality of flows by a simple configuration.

In the above configuration, the plate comprises a first plate and a second plate. The first plate and the second plate are configured such that the second surface of the first plate and the first surface of the second plate face each other at a distance. According to this configuration, the flow of the reducing agent can be split into multiple flows. The first plate and the second plate are at least required for this configuration. For example, the plate may further comprise a third plate. In other words, the number of the plate is not limited to two, and may be three or more.

In the above configuration, the first plate is provided upstream of the second plate in the exhaust gas flow path, and the air guide formed on the second plate is configured such that a width in a direction orthogonal to a direction in which the reducing agent flows is formed wider than that of the air guide formed in the first plate. According to this configuration, the flow of the exhaust gas is sequentially guided from the first plate to the second plate. Thereby, it is possible to widely disperse the reducing agent and suppress biased distribution of the reducing agent.

In the above configuration, the air guide formed in the second plate may be provided to have the distance on the diffusion member side with respect to the air guide formed in the first plate to be wider than the distance on the merging position side. According to this configuration, it is possible to widely disperse the reducing agent and suppress biased distribution of the reducing agent.

In the above configuration, the plate may comprise a blade extending toward the diffusion member, on a side opposite to a side with the air guide. According to this configuration, the exhaust gas containing the reducing agent can be guided to a desired position in the diffusion member.

In the above configuration, the plate may comprise a first blade and a second blade. The second blade may be different in orientation than the first blade. According to this configuration, it is possible to widely disperse the reducing agent and suppress biased distribution of the reducing agent. The first blade and the second blade are at least required for this configuration. For example, the blade may further comprise a third blade. In other words, the number of the blade is not limited to two, and may be three or more.

In the above configuration, the plate may comprise a receiving portion. The receiving portion may extend to the first surface side of the air guide from both sides in a direction orthogonal to the direction in which the reducing agent flows in the air guide. According to this configuration, collection of the exhaust gas containing a reducing agent to the air guide can be facilitated.

In the above configuration, the plate may have a through hole that penetrates the air guide. According to this configuration, by utilizing the flow of the exhaust gas passing through the through hole, it is possible to widely disperse the reducing agent and suppress biased distribution of the reducing agent.

In the above configuration, the diffusion member may be configured to cause a swirling flow in the exhaust gas that has flowed in. According to this configuration, it is possible to suppress the biased distribution of the exhaust gas flowing from the enlarged diameter flow path into the catalyst.

In addition to the exhaust gas purification device described above, the one aspect of the present invention can be implemented in various forms, such as a guide member used in an exhaust gas purification device, a method of suppressing biased distribution of exhaust gas flowing into a catalyst, etc.

### BRIEF DESCRIPTION OF THE DRAWINGS

FIG. 1 is a cross-sectional view showing a configuration of an exhaust gas purification device of a first embodiment.
FIG. 2 is a perspective view of a diffusion member.
FIG. 3 is a view of the diffusion member seen from downstream in an exhaust gas flow path.
FIG. 4 is a view showing a shape of a blade of the diffusion member.
FIG. 5A is a plan view of a guide member of the first embodiment, FIG. 5B is a side view thereof, and FIG. 5C is a rear view thereof.
FIG. 6 is a perspective view of the guide member of the first embodiment.
FIG. 7 is an exploded view of the guide member of the first embodiment.
FIG. 8 is a cross-sectional view showing a configuration of an exhaust gas purification device of a comparative example.
FIG. 9A is a diagram showing a simulation result of a flow of a reducing agent in the exhaust gas purification device of the comparative example, and FIG. 9B is a diagram showing a simulation result of the flow of the reducing agent in the exhaust gas purification device of the first embodiment.
FIG. 10A is a diagram showing a simulation result of distribution of the reducing agent in a catalyst end surface of the exhaust gas purification device of the comparative example, FIG. 10B is a diagram showing a simulation result of distribution of the reducing agent in a catalyst end surface of the exhaust gas purification device of the first embodiment.
FIG. 11A is a plan view of a guide member of a second embodiment, FIG. 11B is a side view thereof, FIG. 11C is a rear view thereof, and FIG. 11D is a perspective view thereof.
FIG. 12A is a plan view of a guide member of a third embodiment, FIG. 12B is a side view thereof, FIG. 12C a rear view thereof, and FIG. 12D is a perspective view thereof.
FIG. 13A is a plan view of a guide member of a fourth embodiment, FIG. 13B is a side view thereof, FIG. 13C is a rear view thereof, and FIG. 13D is a perspective view thereof.
FIG. 14A is a plan view of a guide member of a fifth embodiment, FIG. 14B is a side view thereof, FIG. 14C is a rear view thereof, and FIG. 14D is a perspective view thereof.
FIG. 15A is a plan view of a guide member of a modification, FIG. 15B is a side view thereof, FIG. 15C is a rear view thereof, and FIG. 15D is a perspective view thereof.
FIG. 16 is a cross-sectional view showing a configuration of an exhaust gas purification device with a linear exhaust gas flow path.

### EXPLANATION OF REFERENCE NUMERALS

1 ... exhaust gas purification device, 2 ... channel member, 3 ... catalyst, 4 ... injector, 9 ... diffusion member, 10,20,30,40,50,60 ... guide member, 11 ... first plate, 11A ... air guide, 11B ... blade, 12 ... second plate, 12A... air guide, 12B ... blade, 13 ... third plate, 13A ... air guide, 13B ... blade

### MODE FOR CARRYING OUT THE INVENTION

Hereinafter, embodiments to which the present invention is applied will be described with reference to the drawings.

### [1. First Embodiment]

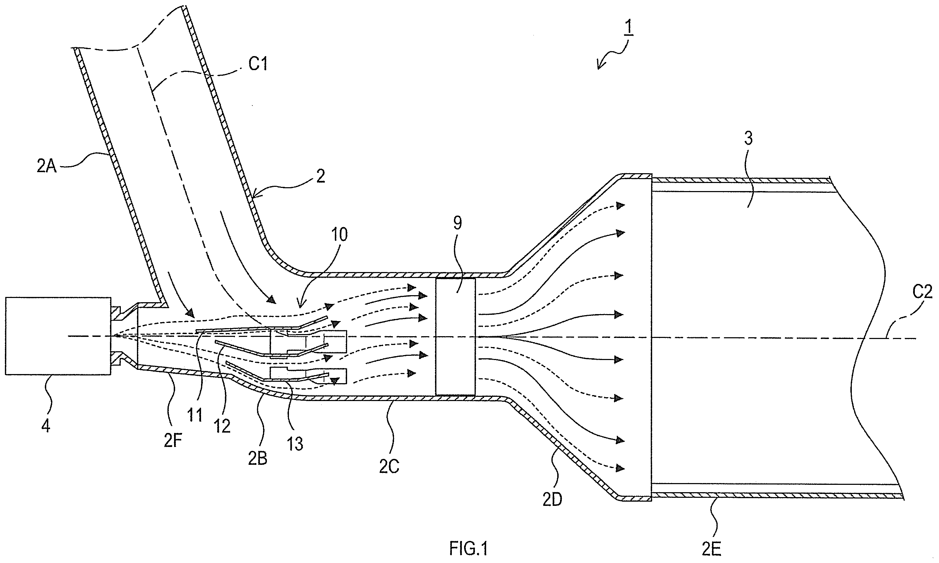

An exhaust gas purification device 1 shown in FIG. 1 purifies exhaust gas discharged from an internal combustion engine (for example, diesel engines) of a motor vehicle. The exhaust gas purification device 1 comprises a channel member 2, a catalyst 3, an injector 4, a diffusion member 9, and a guide member 10. In the following description, up and down and left and right directions (vertical and horizontal directions) will be represented relative to FIG. 1. It should be noted, however, that such a representation is merely for convenience of explanation, and orientation of the exhaust gas purification device 1 is not particularly limited.

The channel member 2 forms part of an exhaust gas flow path for guiding exhaust gas discharged from the internal combustion engine to outside of the motor vehicle, in particular the exhaust gas flow path leading to the catalyst 3. The channel member 2 comprises, sequentially from upstream of the exhaust gas flow path (left side in FIG. 1), a first tube 2A, a second tube 2B, a third tube 2C, a fourth tube 2D, and a fifth tube 2E. Classification of these first to fifth tubes 2A to 2E is merely for convenience of description. Classification of parts constituting the channel member 2 is not particularly limited. Number of sections constituting the channel member 2 is not particularly limited.

The first tube 2A is a straight circular tube. The third tube 2C is a straight circular tube having the same inner diameter with the first tube 2A. However, the third tube 2C is different from that the first tube 2A in direction of flow of the exhaust gas. Specifically, the first tube 2A forms a flow path in which the exhaust gas flows diagonally downward, and the third tube 2C forms a flow path in which the exhaust gas flows in a horizontal direction. The first tube 2A and the third tube 2C are connected by the gently-sloping second tube 2B which is a circular tube curved in an arc shape in a side view. In the present embodiment, a first axis C1 which is a center axis of the first tube 2A and a second axis C2 which is a center axis of the third tube 2C are positioned to cross each other.

The fifth tube 2E is a straight circular tube coaxial to the third tube 2C (having the second axis C2 as the central axis). However, the fifth tube 2E is larger than the third tube 2C in inner diameter in order to accommodate the cylindrical catalyst 3 having an outer diameter larger than the inner diameter of the third tube 2C. The third tube 2C and the fifth tube 2E are connected by the gently-sloping fourth tube 2D which is a circular tube (with a tapered diameter in the present embodiment) that forms an enlarged diameter flow path for gradually expanding the inner diameter of the exhaust gas flow path.

In other words, as the exhaust gas flow path leading to the catalyst 3, the exhaust gas flow path having a curved channel and an enlarged diameter channel is formed upstream of the catalyst 3.

In addition, the channel member 2 comprises a sixth tube 2F that forms a reducing agent flow path for injecting a reducing agent from the injector 4 to the exhaust gas flow path. The sixth tube 2F is a circular tube coaxial to the third tube 2C (having the second axis C2 as the central axis). In the present embodiment, the sixth tube 2F is configured such that an inner diameter of the reducing agent flow path is gradually expanded toward the exhaust gas flow path (with a slightly tapered diameter in the present embodiment), so that the injected reducing agent is less likely to directly hit against the inner surface (less likely to corrode). The sixth tube 2F is connected to the second tube 2B. The reducing agent injected by the injector 4 merges with the exhaust gas flowing through the second tube 2B.

The catalyst 3 is a catalyst of SCR (Selective Catalytic Reduction) type having a function of reducing nitrogen oxides (NOx). The catalyst 3 is provided downstream of the enlarged diameter flow path in the exhaust gas flow path (specifically inside the fifth tube 2E).

The injector 4 functions as a supplier that injects the liquid reducing agent, and supplies the reducing agent to upstream of the diffusion member 9 in the exhaust gas flow path (specifically, into the second tube 2B) through the sixth tube 2F. In the present embodiment, urea water is injected as the reducing agent. Strictly speaking, urea water injected to the exhaust gas is hydrolyzed by heat of the exhaust gas to produce ammonia (NH₃), and the produced ammonia functions as a reducing agent. However, a state prior to hydrolysis (i.e., urea water) is also referred to as the reducing agent.

The diffusion member 9 drains the exhaust gas flowing from upstream to the enlarged diameter flow path to be diffused so as to suppress biased distribution of the exhaust gas flowing into the catalyst 3 (to bring the exhaust gas distribution closer to a uniform state). The diffusion member 9 is provided upstream of the enlarged diameter flow path in the exhaust gas flow path (inside the third tube 2C).

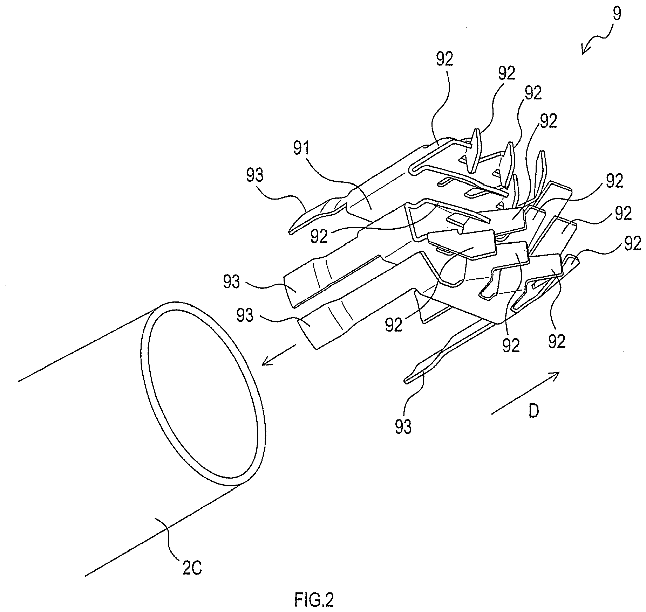

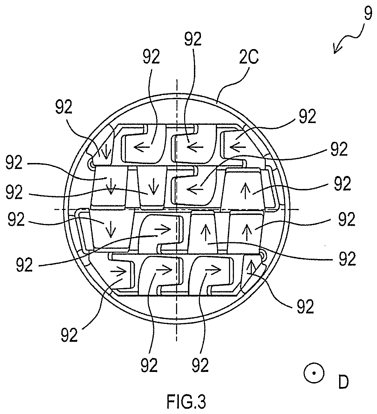

A specific structure of the diffusion member 9 as an example will be described with reference to FIGS. 2 and 3. The diffusion member 9 shown in FIGS. 2 and 3 is formed by bending a single metal plate, and comprises a main body 91, a plurality of blades 92, and a plurality of supports 93.

The supports 93 are protruding pieces extending toward upstream along a flow direction D of the exhaust gas. The supports 93 protrude radially outward as compared with the main body 91 by being bent in a stepped manner. Therefore, in a state in which the diffusion member 9 is fitted in the third tube 2C, outer surfaces of the supports 93 are in contact with an inner surface of the third tube 2C, resulting a gap between the main body 91 and the inner surface of the third tube 2C. When the supports 93 and the third tube 2C are welded at the interfaces, the main body 91 is supported by the supports 93. That is, the diffusion member 9 is fixed to the third tube 2C.

The plurality of blades 92 are protruding pieces formed downstream along the flow direction D of the exhaust gas. Each of the blades 92 is inclined with respect to the flow direction D of the exhaust gas by being bent at a tip, and guides the exhaust gas in a direction corresponding to the inclination. The inclined direction of each of the blades 92 and the direction to guide the exhaust gas are set as follows.

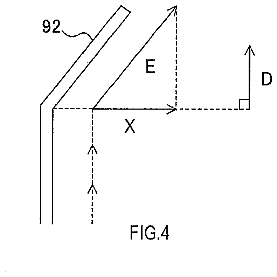

Assuming that a vector of the direction in which each of the blades 92 guides the exhaust gas is a vector E as shown in FIG. 4, the vector E may be a vector directed from a base of each of the blades 92 to the tip. A component of the vectors E in a plane orthogonal to the flow direction D of the exhaust gas is assumed as a vector X. When viewing the diffusion member 9 from downstream in the flow direction D of the exhaust gas, the vector X of each of the blades 92 makes a circuit along a certain route as a whole, as shown in FIG. 3. Therefore, the exhaust gas passing through the diffusion member 9 is guided in the direction of the vector X in each of the blades 92. As a result, in the exhaust gas flowing into the diffusion member 9, a swirl flow that is counterclockwise in FIG. 3 is generated as a whole. Therefore, the exhaust gas is likely to spread to the enlarged diameter flow path, and biased distribution of the exhaust gas flowing into the catalyst 3 is suppressed.

The guide member 10 splits the flow of the reducing agent flowed in from upstream into a plurality of flows and guiding the flows to the diffusion member 9, so as to suppress biased distribution of the reducing agent flowing into the diffusion member 9 (to bring the exhaust gas distribution closer to a uniform state). Therefore, the guide member 10 is disposed upstream of the diffusion member 9, and at a merging position, or downstream of the merging position, where the reducing agent in the exhaust gas flow path merges with the exhaust gas. In the present embodiment, tips of three air guides 11A to 13A to be described later are provided to be located at the merging position of the reducing agent (in other words, at a position closer to the injector 4 than the first axis C1).

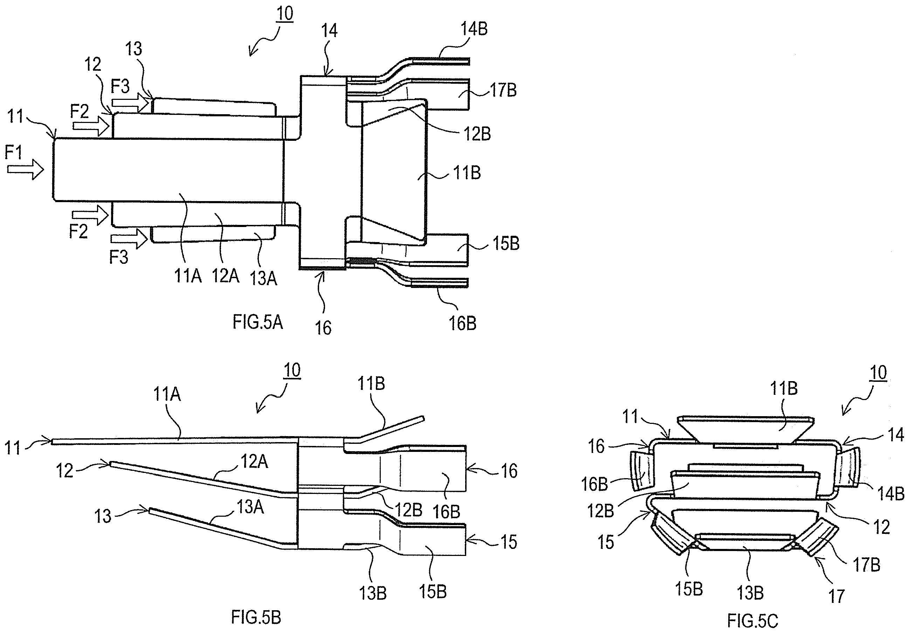

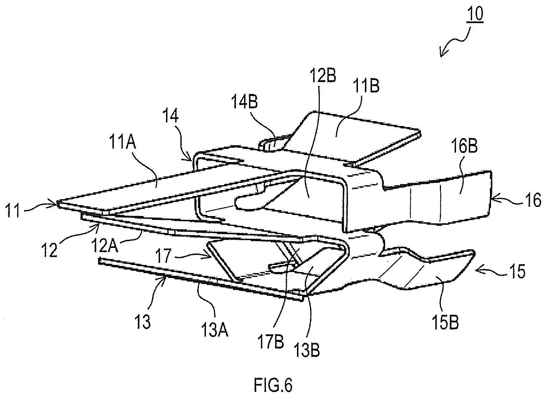

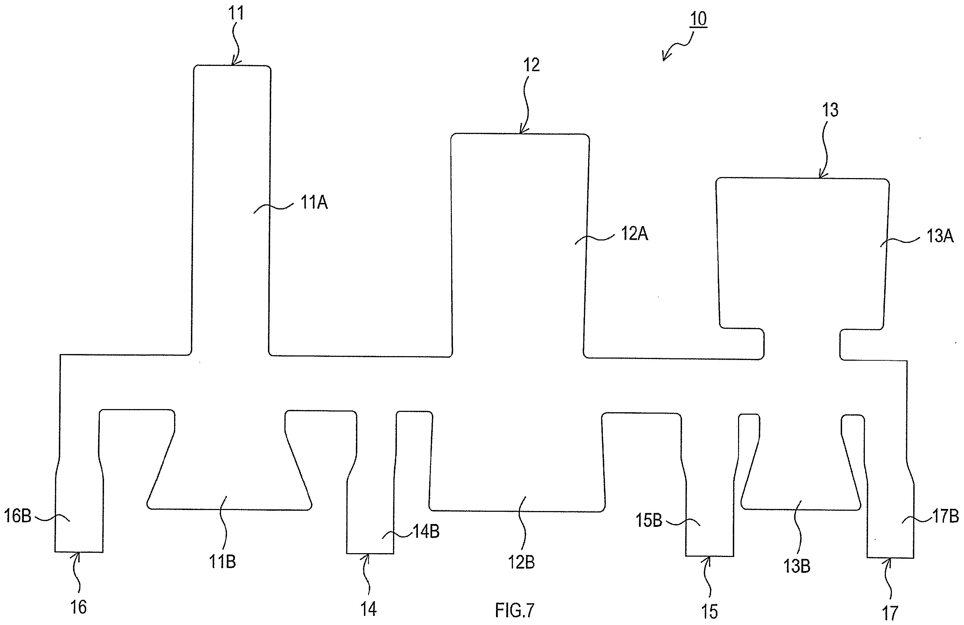

A specific configuration of the guide member 10 of the first embodiment will be described with reference to FIGS. 5A, 5B, 5C, 6 and 7. FIG. 5A is a view of the guide member 10 seen from above (plan view), and FIG. 5B is a view of the guide member 10 seen from the side (side view). Right and left directions in FIGS. 5A and 5B coincide with a right and left direction in FIG. 1. FIG. 5C is a view of the guide member 10 seen from downstream (diffusion member 9 side) along the second axis C2 (rear view).

The guide member 10 is formed by bending a single metal plate. Specifically, the guide member 10 comprises a first plate 11, a second plate 12, a third plate 13, a fourth plate 14, a fifth plate 15, a sixth plate 16, and a seventh plate 17. Classification of these first to seventh plates 11 to 17 is merely for convenience of description, which is obtained by dividing the guide member 10 into a plurality of parts.

The first to seventh plates 11 to 17 are formed at an angle parallel or nearly parallel to the second axis C2 so that a flow of the reducing agent injected through the sixth tube 2F is less likely to be blocked.

Each of the first to third plates 11 to 13 forms a plane parallel to a line orthogonal to the first axis C1 and the second axis C2 (i.e., a line in an up and down direction in FIG. 5A, and a line in a left and right direction in FIG. 5C). Specifically, in the first to third plates 11 to 13, a top surface facing substantially upward (first surface) and a bottom surface facing substantially downward (second surface which is a back surface of the first surface) are formed.

In the first to third plates 11 to 13, the top surface of the third plate 13 and the bottom surface of the second plate 12 are provided to face each other at a distance, and the top surface of the second plate 12 and the bottom surface of the first plate 11 are provided to face each other at a distance. Specifically, the first plate 11 is provided upstream of the second plate 12 and the third plate 13 in the exhaust gas flow path, so as to face the flow of the exhaust gas from the first tube 2A. The second plate 12 is provided upstream of the third plate 13 in the exhaust gas flow path, so as to face the flow of the exhaust gas from the first tube 2A behind the first plate 11 (downward of the first plate 11). The third plate 13 is provided so as to face the flow of the exhaust gas from the first tube 2A behind the second plate 12 (downward of the second plate 12).

The fourth plate 14 connects one end of the first plate 11 (right end in FIG. 5C) and one end of the second plate 12 (right end in FIG. 5C). Similarly, the fifth plate 15 connects the other end of the second plate 12 (left end in FIG. 5C) and one end of the third plate 13 (left end in FIG. 5C).

To the other end of the first plate 11 (left end in FIG. 5C), the sixth plate 16 substantially symmetrical to the fourth plate 14 is connected across the first plate 11. Similarly, to the other end of the third plate 13 (right end in FIG. 5C), the seventh plate 17 substantially symmetrical to the fifth plate 15 is connected across the third plate 13.

In other words, the first to seventh plates 11 to 17 are formed into an S-shape when viewed from a direction along the second axis C2 (more specifically, as shown in FIG. 5C, a reversed S-shape when viewed from upstream in the exhaust gas flow path).

The first plate 11 has an air guide 11A which is a protruding piece extending toward the merging position of the reducing agent. Similarly, the second plate 12 has an air guide 12A which is a protruding piece extending toward the merging position of the reducing agent, and the third plate 13 has an air guide 13A which is a protruding piece extending toward the merging position of the reducing agent. In other words, the guide member 10 has a three-stage shape with three air guides 11A to 13A.

Also, the air guide 12A has a width in a direction (an up and down direction in FIG. 5A) orthogonal to a direction of flow of the reducing agent (a direction along the second axis C2, and the right and left direction in FIG. 5A) wider than the air guide 11A. Furthermore, the air guide 13A is wider in width than the air guide 12A. That is, the three air guides 11A to 13A are formed so as to increase their width in a stepwise manner when seen from above (see FIG. 5A).

Also, the three air guides 11A to 13A are not provided in parallel to each other, but are provided so as to narrow their distance toward the merging position. That is, the air guide 12A is provided to have the distance on the diffusion member 9 side with respect to the air guide 11A to be wider than the distance on the merging position side, and the air guide 13A is provided to have the distance on the diffusion member 9 side with respect to the air guide 12A to be wider than the distance on the merging position side.

Because the guide member 10 having a shape as such is provided, the flow of the reducing agent injected by the injector 4 is split to a top surface side and a bottom surface side by each of the three air guides 11A to 13A, and is split into a plurality of (four, in the present embodiment) flows in an up and down direction. Specifically, the flow is split into a first flow path above the first plate 11, a second flow path formed between the first plate 11 and the second plate 12, a third flow path formed between the second plate 12 and the third plate 13, and a fourth flow path below the third plate 13.

Also, the first plate 11 has a blade 11B which is a protruding piece extending toward the diffusion member 9, on a side opposite to a side with the air guide 11A. Similarly, the second plate 12 has a blade 12B which is a protruding piece extending toward the diffusion member 9, on a side opposite to a side with the air guide 12A. Also, the third plate 13 has a blade 13B which is a protruding piece extending toward the diffusion member 9, on a side opposite to a side with the air guide 13A. The three blades 11B to 13B are bent obliquely upward toward downstream of the exhaust gas, and each provided at an angle different from the corresponding air guides 11A to 13A. Therefore, the exhaust gas flowing along the top surfaces of the blades 11B to 13B (exhaust gas containing the reducing agent) is guided upward in the exhaust gas flow path, as compared to a configuration without the guide member 10.

Also, the fourth plate 14 has a support 14B which is a protruding piece extending toward downstream in the exhaust gas flow path. The fifth plate 15 has a support 15B which is a similar protruding piece, the sixth plate 16 has a support 16B which is a similar protruding piece, and the seventh plate 17 has a support 17B which is a similar protruding piece. The four supports 14B to 17B are bent in a stepped manner, so as to protrude radially outward. Therefore, in a state in which the guide member 10 is fitted into the third tube 2C, each of outer surfaces of the four supports 14B to 17B is in contact with the inner surface of the third tube 2C. When each of the four supports 14B to 17B and the third tube 2C are welded at the interfaces, the guide member 10 is fixed to the third tube 2C.

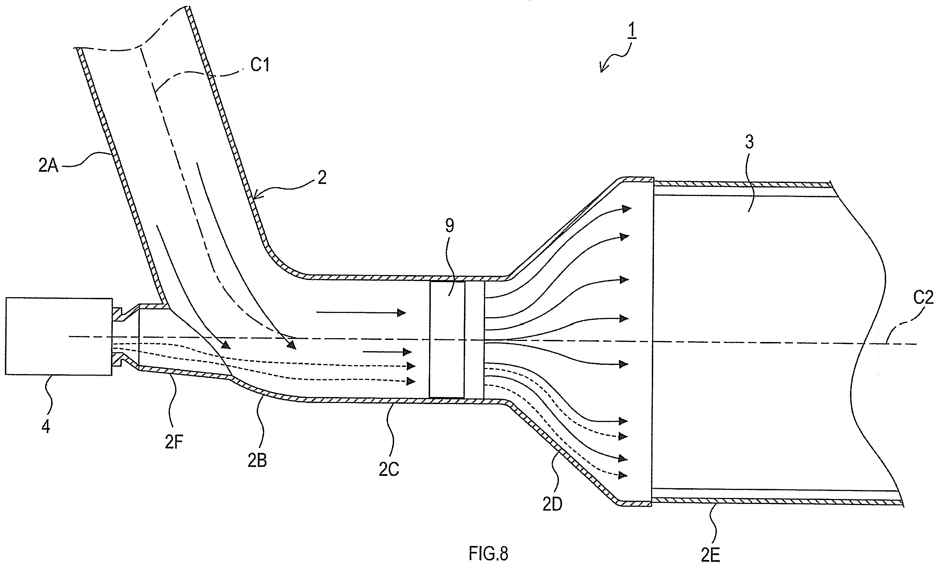

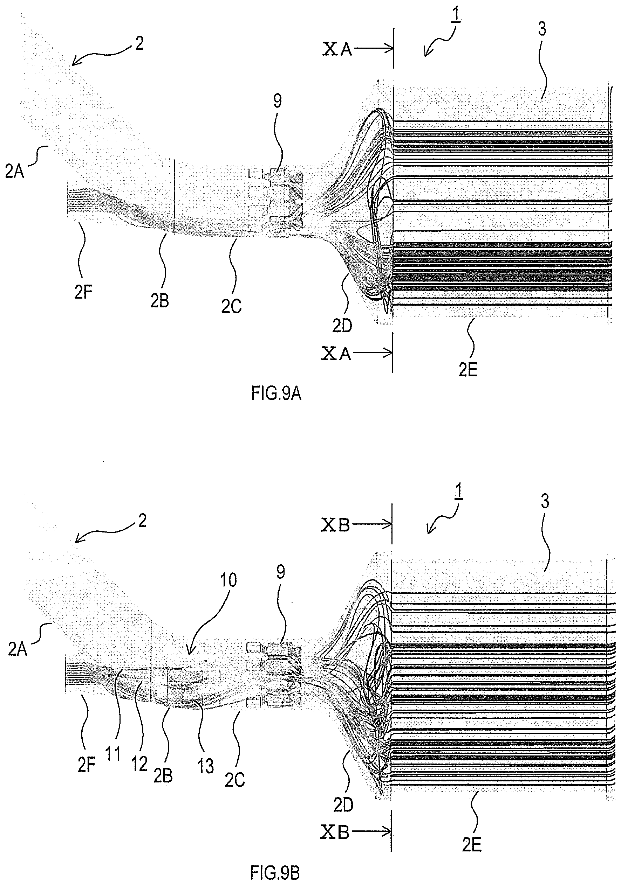

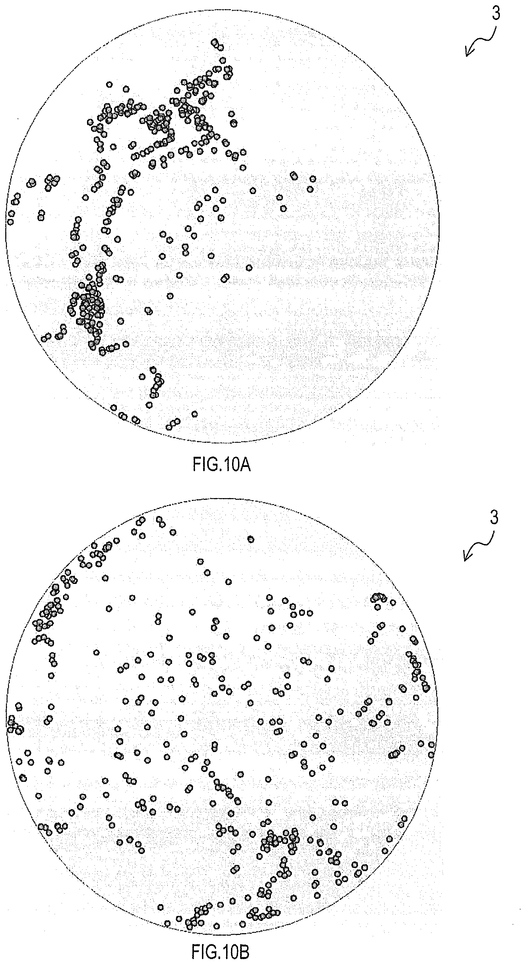

According to the first embodiment described above, the following effects can be obtained.
[A1] The exhaust gas purification device 1 according to the first embodiment can suppress biased distribution of the reducing agent flowing to the diffusion member 9, since the guide member 10 is provided upstream of the diffusion member 9, as compared to a configuration without the guide member 10. Therefore, it is possible to suppress biased distribution of the exhaust gas flowing into the catalyst 3.
   Here, a reason why such an effect is obtained will be explained in comparison with the configuration without the guide member 10 (an exhaust gas purification device of a comparative example).
   As shown in FIG. 8, in the exhaust gas purification device of the comparative example without the guide member 10, due to a biased flow of exhaust gas in a curved flow path in a exhaust gas flow path, the merged reducing agent is also swept away by the exhaust gas, and is gathered at a lower part of the exhaust gas flow path. Therefore, distribution of the reducing agent flowing to the diffusion member 9 is largely biased downward in the present embodiment. The diffusion member 9 has a function of suppressing biased distribution of the exhaust gas in the enlarged diameter flow path, but the effect of spreading the reducing agent that has unevenly flowed in to the entire exhaust gas flow path is small. Therefore, the exhaust gas that has passed through the diffusion member 9 easily flows into the catalyst 3 in a state that distribution of the reducing agent is biased. In such a state, it is not possible to obtain sufficient exhaust gas purifying effect by the catalyst 3.
   In contrast, in the exhaust gas purification device 1 of the first embodiment, as shown in FIG. 1, the guide member 10 is provided in front of the diffusion member 9 and at a position where the reducing agent is easily biased (the lower part in the exhaust gas flow path, in the present embodiment). The guide member 10 splits the flow of the reducing agent injected by the injector 4 into a plurality of flows in the up and down direction by the air guides 11A to 13A, and guides the flows to a plurality of positions in the diffusion member 9 by the blades 11B to 13B. Therefore, it is possible to adjust the flow of the reducing agent so as to suppress biased distribution of the reducing agent flowing to the diffusion member 9.
   Now, simulation results will be described. As shown in FIG. 9A, in the exhaust gas purification device of the comparative example, since the exhaust gas flow is biased to the lower part of the exhaust gas flow path in the curved flow path, the flow of the reducing agent (streamline in the figure) is also biased to the lower part of the exhaust gas flow path, and distribution of the reducing agent in the exhaust gas is biased. Therefore, as shown in FIG. 10A, distribution (dots in the figure) of the reducing agent (ammonia) at an end face of the catalyst 3 is biased. FIG. 10A corresponds to an XA-XA cross-sectional view of FIG. 9A.
   In contrast, as shown in FIG. 9B, in the exhaust gas purification device 1 of the first embodiment, it is possible to adjust the flow of exhaust gas and the reducing agent by the guide member 10 provided in front of the diffusion member 9. Specifically, flows along the top surfaces of the air guides 11A to 13A are generated by the guide member 10. Also, the exhaust gas flowing around is caught by negative pressure spaces formed in back surfaces (bottom surfaces) of the air guides 11A to 13A. Thereby, a biased flow of the reducing agent (streamline in the figure) is suppressed, and the flow is effectively guided to the diffusion member 9. Then, the blades 11B to 13B guide the reducing agent to a position in the diffusion member 9 where it is difficult for the reducing agent to flow in (e.g., top part). Thereby, the exhaust gas in a state where biased distribution of the reducing agent is suppressed can be made to flow to the diffusion member 9. Therefore, as shown in FIG. 10B, distribution (dots in the figure) of the reducing agent (ammonia) at the end face of the catalyst 3 is less biased than that of the comparative example. FIG 10B corresponds to an XB-XB cross-sectional view of FIG. 9B.
[A2] Further, as shown in FIG. 5A, the three air guides 11A to 13A of the guide member 10 are formed to increase their width in a stepwise manner when seen from above. Therefore, in a flow along the top surface of the uppermost air guide 11A (arrow F1), an outer flow in a width direction is guided to the second-step air guide 12A (arrow F2). In a flow along the top surface of the second-step air guide 12A, an outer flow in a width direction is guided to the third-step air guide 13A (arrow F3). As such, the flow of the exhaust gas can be guided sequentially from the first plate 11 to the second plate 12, and from the second plate 12 to the third plate 13. Thus, it is possible to widely disperse the reducing agent, thereby to suppress its biased distribution.
[A3] Also, the guide member 10 is provided such that the flow paths formed between the three air guides 11A to 13A become wider toward the diffusion member 9. Thus, it is possible to widely disperse the reducing agent in the up and down direction, thereby to suppress its biased distribution.
[A4] Also, the guide member 10 is provided such that the tips of the three air guides 11A to 13A are located at the merging position of the reducing agent (in other words, at a position closer to the injector 4 than the first axis C1). Therefore, even if a flow rate of the exhaust gas is changed, a position where the reducing agent flows in hardly varies. Stable effect can be obtained.
[A5] Also, the guide member 10 comprises the blade 11B to 13B. Thus, the exhaust gas containing the reducing agent can be guided to a desired position in the diffusion member 9. Also, it is possible to accelerate hydrolysis due to collision of the reducing agent with the blades 11B to 13B.
[A6] Also, the guide member 10 has a simple structure, that is, formed by bending a single metal plate, and thus can be implemented at low cost.

### [2. Second Embodiment]

The second embodiment has basically the same configuration as that of the first embodiment, and is only different in using a later described guide member 20, instead of the guide member 10 described above. The same reference numerals are used for the components common to those of the first embodiment, and the description thereof will not be repeated.

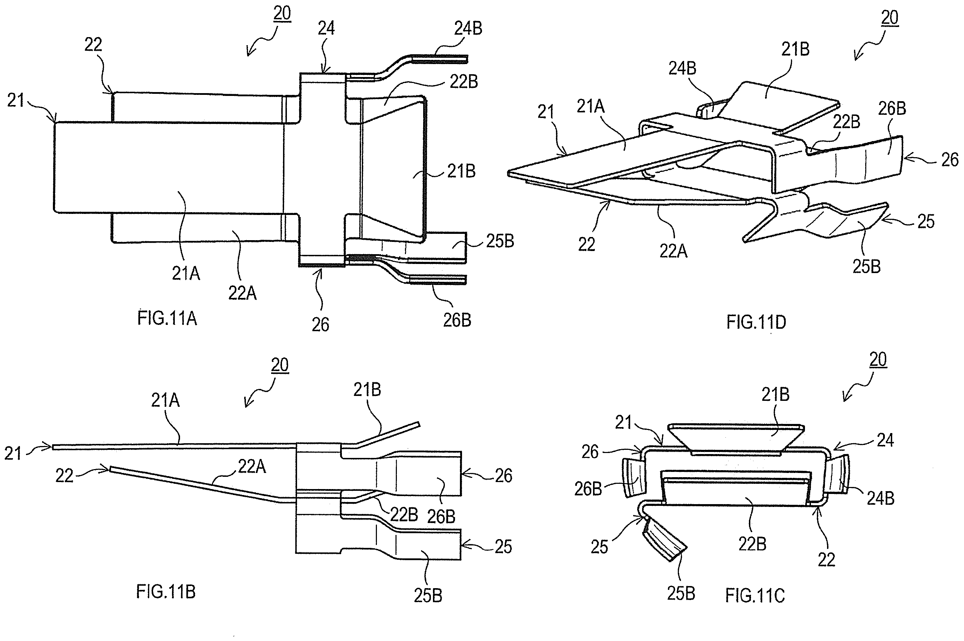

Since the guide member 20 of the second embodiment shown in FIGS. 11A to 11D has basically the same configuration as that of the guide member 10 of the first embodiment, the description will be given focusing on differences.

The guide member 20 of the second embodiment, similar to the guide member 10 of the first embodiment, is formed by bending a single metal plate, but is not provided with the third plate 13 and the seventh plate 17 as in the first embodiment. In other words, the guide member 20 of the second embodiment and the guide member 10 of the first embodiment are different in that, while the guide member 10 has a three-stage shape with the three air guides 11A to 13A, the guide member 20 has a two-stage shape. Specifically, the guide member 20 comprises a first plate 21, a second plate 22, a fourth plate 24, a fifth plate 25, and a sixth plate 26. Each part has the name corresponding to that of the first embodiment.

The first plate 21 and the second plate 22 respectively have air guides 21A and 22A which are protruding pieces extending toward the merging position side of the reducing agent, as in the first embodiment. Therefore, the flow of the reducing agent injected by the injector 4 is split to its upper and lower sides by the two air guides 21A and 22A, and is split into a plurality (three, in the present embodiment) of flows in the up and down direction.

Also, the first plate 21 and the second plate 22 respectively have blades 21B and 22B which are protruding pieces extending toward the diffusion member 9, on a side opposite to a side with the air guides 21A and 22A, as in the first embodiment.

The fourth plate 24, the fifth plate 25 and the sixth plate 26 respectively have supports 24B, 25B and 26B which are protruding pieces extending toward downstream in the exhaust gas flow path. When each of the supports 24B, 25B and 26B and the third tube 2C are welded at the interfaces, the guide member 20 is fixed to the third tube 2C.

According to the second embodiment described above, the same effect as that of the first embodiment can be obtained. In addition, according to the second embodiment, it is possible to widen negative pressure spaces formed on back (bottom surfaces) of the air guides 21A and 22A, and effectively guide the reducing agent to the diffusion member 9.

### [3. Third Embodiment]

The third embodiment has basically the same configuration as that of the first embodiment, and is different in that a later described guide member 30 is used instead of the guide member 10 described above. The same reference numerals are used for the components common to those of the first embodiment, and the description thereof will not be repeated.

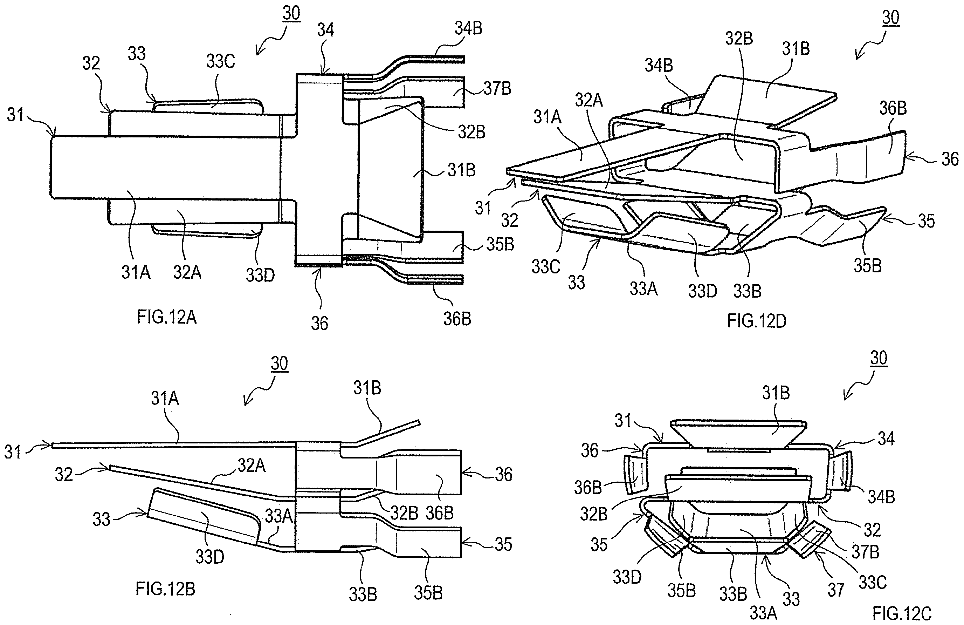

The guide member 30 of the third embodiment shown in FIGS. 12A to 12D basically has the same configuration as that of the guide member 10 of the first embodiment. Thus, the description will be given focusing on the differences.

The guide member 30 of the third embodiment, similar to the guide member 10 of the first embodiment, is formed by bending a single metal plate, and comprises a first plate 31, a second plate 32, a third plate 33, a fourth plate 34, a fifth plate 35, a sixth plate 36, and a seventh plate 37. Each part has the name corresponding to that of the first embodiment.

The first to third plates 31 to 33, like the first embodiment, respectively have air guides 31A to 33A which are protruding pieces extending toward the merging position of the reducing agent. The third embodiment differs from the first embodiment in that receiving portions 33C and 33D are formed so as to extend toward the top surface of the air guide 33A (diagonally upward in the present embodiment) from both sides of the direction orthogonal to the direction in which the reducing agent flows in the air guide 33A (width direction).

The first to third plates 31 to 33, similar to the first embodiment, respectively have blades 31B to 33B which are protruding pieces extending toward the diffusion member 9 on a side opposite to a side with the air guides 31A to 33A. Also, the fourth to seventh plates 34-37 respectively have supports 34B to 37B which are protruding pieces extending toward downstream in the exhaust gas flow path.

According to the third embodiment described above, the same effect as that of the first embodiment can be obtained. In addition, according to the third embodiment, as the lowermost third plate 33 is formed into a receiving shape having the receiving portions 33C and 33D extending obliquely upward, the exhaust gas containing the reducing agent is easy to be gathered to the air guide 33A. More exhaust gas can be guided to the blades 31B to 33B.

### [4. Fourth Embodiment]

The fourth embodiment has basically the same configuration as that of the first embodiment, and is different in that a later described guide member 40 is used instead of the guide member 10 described above. The same reference numerals are used for the components common to those of the first embodiment, and the description thereof will not be repeated.

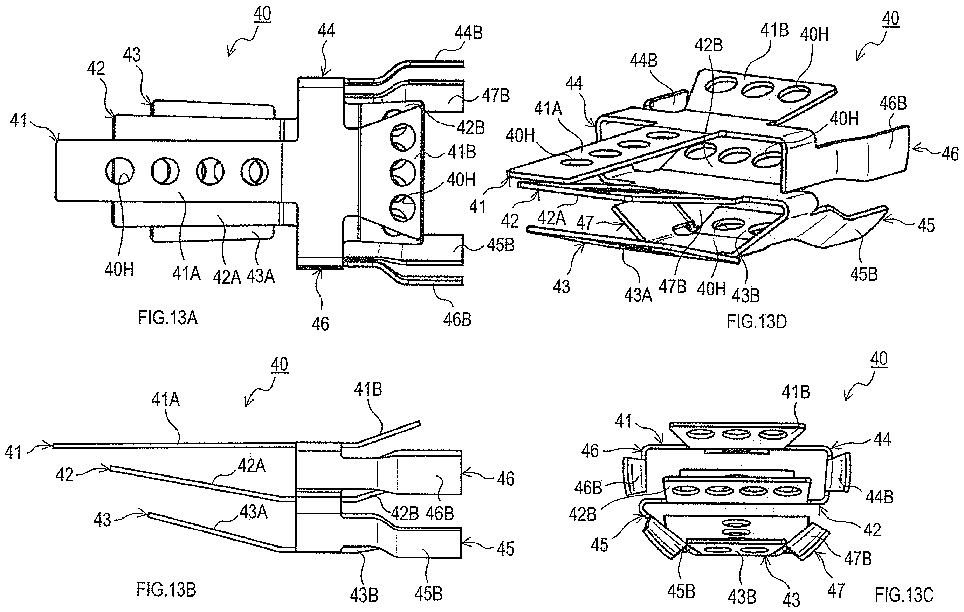

The guide member 40 of the fourth embodiment shown in FIGS. 13A to 13D basically have the same configuration as the guide member 10 of the first embodiment. Thus, the description will be given focusing on the differences.

The guide member 40 of the fourth embodiment, similar to the guide member 10 of the first embodiment, is formed by bending a single metal plate, and comprises a first plate 41, a second plate 42, a third plate 43, a fourth plate 44, a fifth plate 45, a sixth plate 46, and a seventh plate 47. Each part has the name corresponding to that of the first embodiment.

The first to third plates 41 to 43, like the first embodiment, respectively have air guides 41A to 43A which are protruding pieces extending toward the merging position of the reducing agent. Also, the first to third plates 41 to 43, similar to the first embodiment, respectively have blades 41B to 43B which are protruding pieces extending toward the diffusion member 9 on a side opposite to a side with the air guides 41A to 43A.

The fourth embodiment differs from the first embodiment in that a plurality of circular through-holes 40H are formed in the air guides 41A to 43A and the blades 41B to 43B.

The fourth to seventh plates 44-47 respectively have supports 44B to 47B which are protruding pieces extending toward downstream in the exhaust gas flow path.

According to the fourth embodiment described above, the same effect as that of the first embodiment can be obtained. In addition, according to the fourth embodiment, since the plurality of through holes 40H are formed in the air guides 41A to 43A and the blades 41B to 43B, it is possible to guide the flow of the exhaust gas over a wide range, while promoting hydrolysis of the reducing agent by utilizing the flow of exhaust gas passing through the through holes 40H.

### [5. Fifth Embodiment]

The fifth embodiment has basically the same configuration as that of the first embodiment, and is different in that a later described guide member 50 is used instead of the guide member 10 described above. The same reference numerals are used for the components common to those of the first embodiment, and the description thereof will not be repeated.

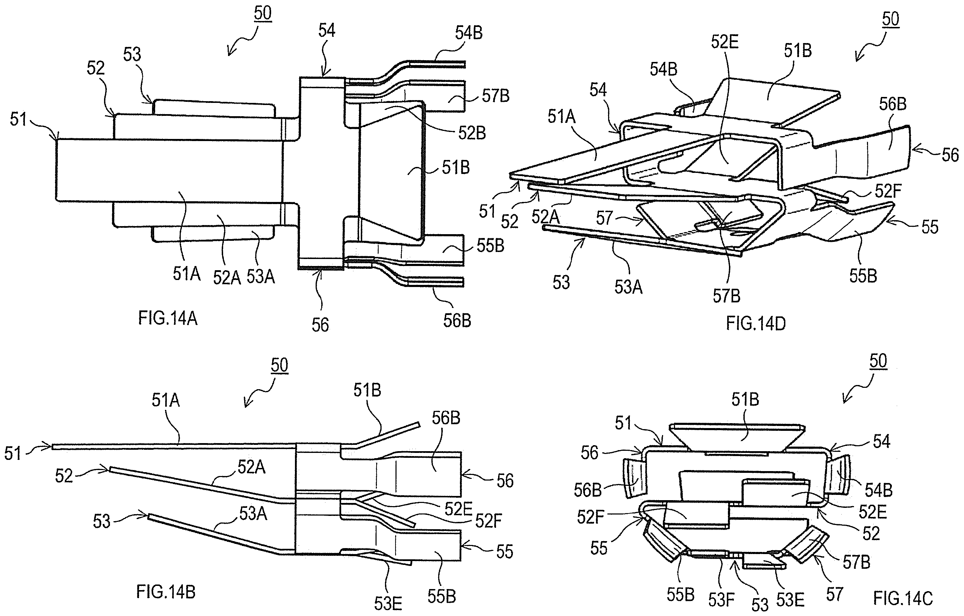

The guide member 50 of the fifth embodiment shown in FIGS. 14A to 14D basically has the same configuration as that of the guide member 10 of the first embodiment. Thus, the description will be given focusing on the differences.

The guide member 50 of the fifth embodiment, similar to the guide member 10 of the first embodiment, is formed by bending a single metal plate, and comprises a first plate 51, a second plate 52, a third plate 53, a fourth plate 54, a fifth plate 55, a sixth plate 56, and a seventh plate 57. Each part has the name corresponding to that of the first embodiment.

The first to third plates 51 to 53, like the first embodiment, respectively have air guides 51A to 53A which are protruding pieces extending toward the merging position of the reducing agent. Also, the first plate 51, as in the first embodiment, has a blade 51B which is a protruding piece extending toward the diffusion member 9, on a side opposite to a side with the air guide 51A.

The fifth embodiment differs from the first embodiment in that two blades 52E and 52F are provided in the second plate 52, instead of the blade 12B referred to in the first embodiment, and two blades 53E and 53F are provided in the third plate 53, instead of the blade 13B referred to in the first embodiment.

With respect to the blades 52E and 52F formed in the second plate 52, the blade 52E on the right side referred to in FIG. 14C is bent diagonally upward, while the blade 52F on the left side referred to in FIG. 14C is bent obliquely downward. With respect to the blades 53E and 53F formed in the third plate 53, the blade 53E on the right side referred to in FIG. 14C is bent diagonally downward, while the blade 53F on the left side referred to in FIG. 14C is bent diagonally upward. That is, in each of the second plate 52 and the third plate 53, a plurality (two blades of the first blade and the second blade in the present embodiment) of blades of which orientation is different from each other are formed.

The fourth to seventh plates 54 to 57 respectively have supports 54B to 57B which are protruding pieces extending toward downstream of the exhaust gas flow path.

According to the fifth embodiment described above, the same effect as that of the first embodiment can be obtained. In addition, according to the fifth embodiment, the plurality (two in the present embodiment) of blades 52E and 52F, and 53E and 53F are respectively formed in the second plate 52 and the third plate 53. Therefore, it is possible to widely disperse the reducing agent and suppress biased distribution of the reducing agent.

### [6. Other embodiments]

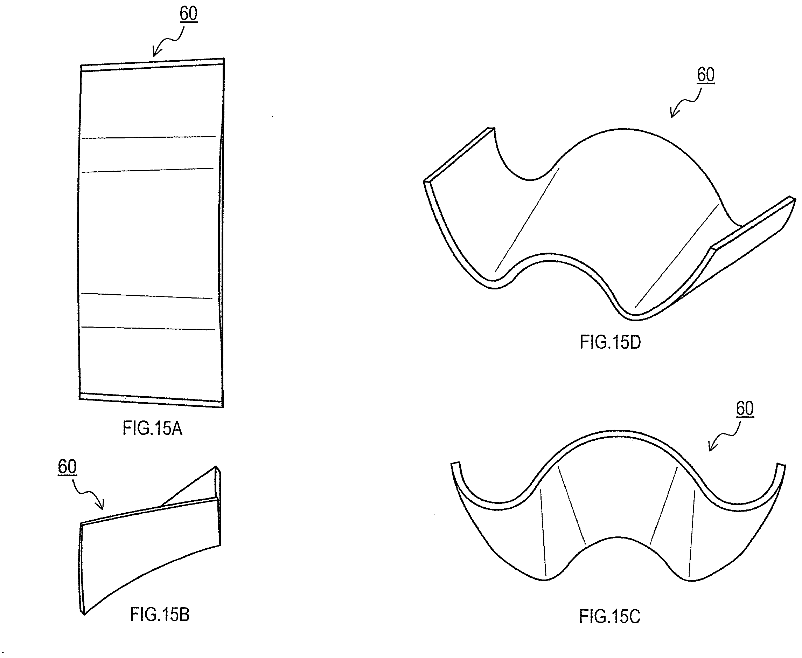

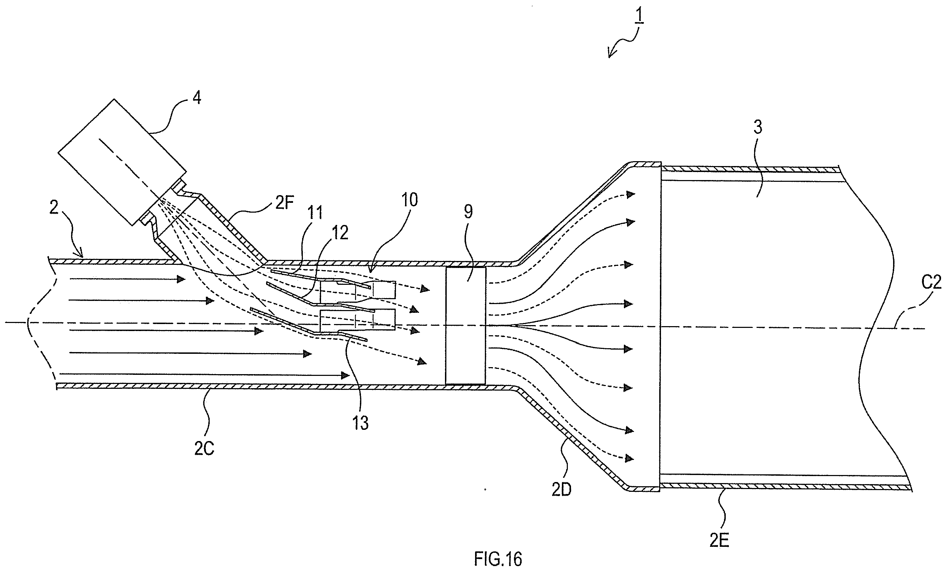

The embodiments of the present invention have been described above. However, it goes without saying that the present invention is not limited to the above embodiments, and may be embodied in various forms.
[B1] In the above embodiments, the guide member comprising a plurality of plates has been illustrated, but the present invention is not limited thereto. For example, a guide member 60 shown in FIGS. 15A to 15D is formed by bending a single metal plate into a W-shape. Even with such a simple configuration, the flow of reducing agent injected by the injector 4 can be split into a plurality (two in the present embodiment) of flows in the up and down direction, and can be guided to multiple locations in the diffusion member 9, as in the first embodiment. Therefore, it is possible to adjust the flow of the reducing agent so that biased distribution of the reducing agent flowing to the diffusion member 9 is suppressed.
[B2] In the above embodiments, the configuration in which the guide member is provided near the merging position has been illustrated, but the present invention is not limited thereto. The guide member may be located at a distance from the merging position. For example, in the configuration shown in FIG. 1, the guide member 10 may be provided at a position closer to the diffusion member 9 than the first axis C1. Even in this way, as long as the guide member is provided at a position where the unevenly distributed reducing agent flows in, the same effect can be obtained.
[B3] In the above embodiments, it is assumed that the exhaust gas flow path comprises a curved flow path, but the present invention is not limited thereto. For example, as shown in FIG. 16, the present invention may be applied to a linear-shaped exhaust gas flow path. That is, in a configuration shown in FIG. 16, since the direction in which the reducing agent is supplied and the direction of flow of the exhaust gas are different at the merging position where the reducing agent merges with the exhaust gas, the reducing agent is influenced by the flow of the exhaust gas and is easily biased to one side (upward in the present embodiment). With the presence of the guide member 10, the flow of reducing agent injected by the injector 4 can be guided downward.
[B4] The configuration of such as the channel member, the diffusion member, the guide member of the above embodiments is merely an example. Configurations and fixing methods different from those of the above-described embodiments may be employed. For example, the guide member may have only one air guide or may have a plurality of (for example, four or more) air guides. Also, for example, the guide member may have a configuration without the blade. Also, for example, the first tube 2A and the third tube 2C may take a tubular shape other than a circular tube, and may take a curved shape. The first tube 2A and the third tube 2C can be different in inner diameter. The third tube 2C and the fifth tube 2E may not be coaxial. In addition, the features of the plurality of embodiments may be combined.
[B5] The reducing agent is not limited to urea water, as long as it contributes to purification of the exhaust gas in the catalyst.
[B6] Each component of the present invention is merely conceptual, and is not limited to that of the above embodiments. For example, the function of one component may be distributed to a plurality of components or the functions of multiple components may be integrated in one component. Also, at least a portion of the configuration of the above embodiments may be replaced by a well-known configuration having a similar function.

## Claims

1. An exhaust gas purification device (1) comprising:
a catalyst (3) provided downstream of an enlarged diameter flow path in an exhaust gas flow path;
a diffusion member (9) provided upstream of the enlarged diameter flow path in the exhaust gas flow path, the diffusion member configured to cause exhaust gas that has flowed in from upstream to flow out to the enlarged diameter flow path to be diffused;
a supply device (4) for supplying a reducing agent to upstream of the diffusion member in the exhaust gas flow path;
a guide member (10, 20, 30, 40, 50, 60) provided upstream of the diffusion member, and at a merging position, or downstream of the merging position, where the reducing agent in the exhaust gas flow path merges with the exhaust gas, the guide member configured to split a flow of the reducing agent that has flowed in from upstream into a plurality of flows to guide the flows to the diffusion member, wherein
the guide member comprises a plate (11, 12, 13, 21, 22, 31, 32, 33, 41, 42, 43, 51, 52, 53) with an air guide (11A, 12A, 13A, 21A, 22A, 31A, 32A, 33A, 41A, 42A, 43A, 51A, 52A, 53A) that is a protruding piece extending toward the merging position,
the air guide configured to split
the flow of the reducing agent to a first surface side of the plate, and to a second surface side that is a back surface of the first surface,
the plate comprises:
a first plate (11, 21, 31, 41, 51); and
a second plate (12, 22, 32, 42, 52),
the first plate and the second plate are configured such that the second surface of the first plate and the first surface of the second plate face each other at a distance, **characterized in that** the first plate is provided upstream of the second plate in the exhaust gas flow path, and
the air guide formed in the second plate is configured such that a width in a direction orthogonal to a direction in which the reducing agent flows is formed wider than that of the air guide formed in the first plate.

2. The exhaust gas purification device according to claim 1, wherein
the air guide formed in the second plate is provided to have the distance on the diffusion member side with respect to the air guide formed in the first plate to be wider than the distance on the merging position side.

3. The exhaust gas purification device according to claims 1 or 2, wherein
the plate comprises a blade (11B, 12B, 13B, 21B, 22B, 31B, 32B, 33B, 41B, 42B, 43B, 51B, 52E, 52F, 53E, 53F) extending toward the diffusion member, on a side opposite to a side with the air guide.

4. The exhaust gas purification device according to claim 3, wherein
the plate comprises a first blade (52E, 53E) and a second blade (52F, 53F), the second blade being different in orientation than the first blade.

5. The exhaust gas purification device according to any one of claims 1 to 4, wherein
the diffusion member is configured to produce a swirling flow in the exhaust gas that has flowed in.

## Patentansprüche

1. Abgasreinigungsvorrichtung (1), umfassend:
einen Katalysator (3), der in einem Abgasströmungsweg nach einem Strömungsweg mit vergrößertem Durchmesser bereitgestellt ist;
ein Diffusionselement (9), das im Abgasströmungsweg vor dem Strömungsweg mit vergrößertem Durchmesser in dem Abgasströmungsweg bereitgestellt ist, wobei das Diffusionselement ausgebildet ist, um zu bewirken, dass
Abgas diffundiert wird, das in den Strömungsweg mit vergrößertem Durchmesser eingeströmt ist;
eine Zuführvorrichtung (4) vor dem Diffusionselement im Abgasströmungsweg ein Reduktionsmittel zuführt;
ein Führungselement (10, 20, 30, 40, 50, 60) vor dem Diffusionselement und an einer Zusammenführungsstelle oder nach der Zusammenführungsstelle bereitgestellt wird, an der das Reduktionsmittel im Abgasströmungsweg mit dem Abgas zusammengeführt wird, wobei das Führungselement eingerichtet ist, eine Strömung des eingeströmten Reduktionsmittels in eine Mehrzahl von Strömen aufzuteilen, um die Strömungen zum Diffusionselement zu leiten, wobei
das Führungselement eine Platte (11, 12, 13, 21, 22, 31, 32, 33, 41, 42, 43, 51, 52, 53) mit einer Luftleiteinrichtung (11A, 12A, 13A, 21A, 22A, 31A, 32A, 33A, 41A, 42A, 43A, 51A, 52A, 53A) umfasst, die ein vorstehendes Stück ist, das sich zur Zusammenführungsstelle erstreckt, wobei die Luftleiteinrichtung eingerichtet ist, um die Strömung des Reduktionsmittels auf eine erste Oberflächenseite der Platte und eine zweite Oberflächenseite aufzuteilen, die eine Rückfläche der ersten Oberfläche ist, wobei die Platte umfasst:
eine erste Platte (11, 21, 31, 41, 51); und
eine zweite Platte (12, 22, 32, 42, 52),
die erste Platte und die zweite Platte so eingerichtet sind, dass die zweite Oberfläche der ersten Platte und die erste Oberfläche der zweiten Platte in einem Abstand einander gegenüberliegen,
**dadurch gekennzeichnet, dass**
die erste Platte im Abgasströmungsweg vor der zweiten Platte bereitgestellt ist, und
die in der zweiten Platte ausgebildete Luftleiteinrichtung so eingerichtet ist, dass eine Breite in einer Richtung rechtwinklig zu einer Richtung, in der das Reduktionsmittel strömt, breiter ausgebildet ist als die der Luftleiteinrichtung, die in der ersten Platte ausgebildet ist.

2. Abgasreinigungsvorrichtung nach Anspruch 1, wobei
die in der zweiten Platte ausgebildete Luftleiteinrichtung so bereitgestellt ist, dass der Abstand auf der Seite des Diffusionselements in Bezug auf die in der ersten Platte ausgebildete Luftleiteinrichtung größer ist als der Abstand auf der Zusammenführungsseite.

3. Abgasreinigungsvorrichtung nach Anspruch 1 oder 2, wobei
die Platte eine Leitschaufel (11B, 12B, 13B, 21B, 22B, 31B, 32B, 33B, 41B, 42B, 43B, 51B, 52E, 52F, 53E, 53F) aufweist, die sich zum Diffusionsglied auf einer Seite erstreckt, die einer Seite der Luftleiteinrichtung gegenüberliegt.

4. Abgasreinigungsvorrichtung nach Anspruch 3, wobei
die Platte eine erste Leitschaufel (52E, 53E) und eine zweite Leitschaufel (52F, 53F) umfasst, wobei sich die zweite Leitschaufel in der Ausrichtung von der ersten Leitschaufel unterscheidet.

5. Abgasreinigungsvorrichtung nach einem der Ansprüche 1 bis 4, wobei
das Diffusionsglied eingerichtet ist, um eine Wirbelströmung im eingeströmten Abgas zu erzeugen.

## Revendications

1. Dispositif (1) de purification de gaz d'échappement comprenant :
un catalyseur (3) prévu en aval d'un trajet d'écoulement de diamètre élargi dans un trajet d'écoulement des gaz d'échappement ;
un élément de diffusion (9) prévu en amont du trajet d'écoulement de diamètre élargi dans le trajet d'écoulement des gaz d'échappement, l'élément de diffusion étant configuré pour provoquer la diffusion
du gaz d'échappement qui y pénètre depuis l'amont pour en sortir vers le trajet d'écoulement de diamètre élargi ;
un dispositif d'alimentation (4) pour alimenter un agent réducteur en amont de l'élément de diffusion dans le trajet d'écoulement des gaz d'échappement ;
un élément de guidage (10, 20, 30, 40, 50, 60) disposé en amont de l'élément de diffusion, et au niveau d'une position de fusion, ou en aval de la position de fusion, où l'agent réducteur dans le trajet d'écoulement des gaz d'échappement fusionne avec le gaz d'échappement, l'élément de guidage étant configuré pour diviser un flux de l'agent réducteur qui y pénètre depuis l'amont en une pluralité d'écoulements pour guider les écoulements vers l'élément de diffusion, dans lequel
l'élément de guidage comprend une plaque (11, 12, 13, 21, 22, 31, 32, 33, 41, 42, 43, 51, 52, 53) avec un guide d'air (11A, 12A, 13A, 21A, 22A, 31A, 32A, 33A, 41A, 42A, 43A, 51A, 52A, 53A) qui est une pièce saillante s'étendant vers la position de fusion,
le guide d'air étant configuré pour diviser l'écoulement de l'agent réducteur vers un premier côté de surface de la plaque, et vers un second côté de surface qui est une surface arrière de la première surface, la plaque comprenant :
une première plaque (11, 21, 31, 41, 51) ; et
une seconde plaque (12, 22, 32, 42, 52),
la première plaque et la seconde plaque étant configurées de sorte que la seconde surface de la première plaque et la première surface de la seconde plaque se fassent face à distance,
**caractérisé en ce que**
la première plaque est prévue en amont de la seconde plaque dans le trajet d'écoulement des gaz d'échappement, et
le guide d'air formé dans la seconde plaque est configuré de sorte qu'une largeur dans une direction orthogonale à une direction dans laquelle l'agent réducteur circule soit plus grande que celle du guide d'air formé dans la première plaque.

2. Dispositif de purification de gaz d'échappement selon la revendication 1, dans lequel le guide d'air formé dans la seconde plaque est prévu de façon que la distance entre le côté élément de diffusion et le guide d'air formé dans la première plaque soit supérieure à la distance entre le côté position de fusion et ce guide d'air.

3. Dispositif de purification de gaz d'échappement selon les revendications 1 ou 2, dans lequel
la plaque comprend une lame (11B, 12B, 13B, 21B, 22B, 31B, 32B, 33B, 41B, 42B, 43B, 51B, 52E, 52F, 53E, 53F) s'étendant vers l'élément de diffusion, d'un côté opposé à un côté comportant le guide d'air.

4. Dispositif de purification de gaz d'échappement selon la revendication 3, dans lequel
la plaque comprend une première lame (52E, 53E) et une seconde lame (52F, 53F), la seconde lame ayant une orientation différente de la première lame.

5. Dispositif de purification de gaz d'échappement selon l'une quelconque des revendications 1 à 4, dans lequel
l'élément de diffusion est configuré pour produire un écoulement tourbillonnant dans le gaz d'échappement qui y a pénétré.
